# EUROPÄISCHE PATENTSCHRIFT

(11) **EP 2 220 419 B1**
(45) Veröffentlichungstag und Bekanntmachung des Hinweises auf die Patenterteilung: **12.10.2011**
(21) Anmeldenummer: 08864801.9
(22) Anmeldetag: 08.12.2008
(51) Int. Cl.: F16L 53/00, F16L 25/00, F16L 33/00, F16L 33/01

(54) **BEHEIZBARE MEDIENLEITUNG**
HEATABLE MEDIA LINE
CONDUIT CHAUFFABLE POUR FLUIDES

(30) Priorität: 21.12.2007 DE 202007018089 U
(43) Veröffentlichungstag der Anmeldung: 25.08.2010
(73) Patentinhaber: Voss Automotive GmbH, 51688 Wipperfürth (DE)
(72) Erfinder: BORGMEIER, Olav, 42499 Hückeswagen (DE); ISENBURG, Marco, 40885 Ratingen (DE); ERB, Ulrich, 51145 Köln-Porz (DE); ZIERIS, Volker, 51399 Burscheid (DE); BRANDT, Josef, 51688 Wipperfürth (DE); SCHWARZKOPF, Otfried, 51515 Kürten (DE); LECHNER, Martin, 51789 Lindlar (DE); ROSENFELDT, Sascha, 44137 Dortmund (DE)
(74) Vertreter: Patentanwälte Dr. Solf & Zapf
(86) Internationale Anmeldenummer: PCT/EP2008/066991
(87) Internationale Veröffentlichungsnummer: WO 2009/080477

(56) Entgegenhaltungen:
- EP-A- 0 379 635
- EP-A- 1 818 588
- WO-A-2007/032034
- WO-A-2009/013342
- GB-A- 2 423 686

## Beschreibung

Die vorliegende Erfindung betrifft eine elektrisch beheizbare Medienleitung gemäß dem Oberbegriff des Patentanspruchs 1, bestehend aus einer Fluidleitung und mindestens einem mit einem Leitungsende verbundenen Fluidverbinder, wobei die Fluidleitung und der Fluidverbinder jeweils elektrische Heizmittel aufweisen.

Derartige Medienleitungen können insbesondere in Kraftfahrzeugen für solche Medien eingesetzt werden, die auf Grund ihres Gefrierpunktes bereits bei relativ hohen Umgebungstemperaturen zum Gefrieren neigen. Dadurch können bestimmte Funktionen beeinträchtigt werden. Dies ist beispielsweise bei Wasserleitungen für die Scheibenwaschanlage der Fall sowie vor allem auch bei Leitungen für eine wässrige Harnstofflösung, die als NOₓ-Reduktionsadditiv für Dieselmotoren mit so genannten SCR-Katalysatoren eingesetzt wird. Deshalb können bei niedrigen Temperaturen die elektrischen Heizmittel aktiviert werden, um das Gefrieren zu vermeiden oder um das bereits gefrorene Medium aufzutauen.

Eine Medienleitung der genannten Art ist in der WO 2007/073286 A1 beschrieben. Dabei ist jeweils in einem Übergangsbereich zwischen dem Fluidverbinder, der als Steckerteil einer Fluid-Steckverbindung ausgebildet ist, und der Fluidleitung ein hülsenförmiges Übergangsstück vorgesehen, das zwischen dem Fluidverbinder und einem Ende eines die Fluidleitung umschließenden Schutzrohrs angeordnet ist. Zwischen der Leitung und dem Übergangsstück ist ein Hohlraum gebildet, der auch zur Aufnahme von elektrischen Verbindungen der Heizmittel dient. Die Verbindungen sind nur lose in diesem Hohlraum untergebracht, so dass sie gegen mechanische und sonstige Beanspruchungen nur unzureichend geschützt sind. Durch die lose, undefinierte Anordnung könnten die elektrischen Verbindungen miteinander in Kontakt geraten und eventuell einen Kurzschluss verursachen. Außerdem ist die Herstellung und Montage der bekannten Medienleitung schwierig.

Das Dokument WO 2007/032034 A1 beschreibt einen Leitungsverbinder (pipe fitting) für beheizbare Leitungen eines SCR-Systems. Dabei besteht der Verbinder aus einem Kunststoff-Körper mit zwei Anschluss-Enden. Auf das als Stecker bzw. Anschlussdom (male coupling) ausgebildete Ende ist ein Ende einer Leitung (piping) aufsteckbar. Die Leitung weist elektrische Heizmittel in Form eines schraubenlinienförmig um die Leitung verlaufenden Heizleiters auf. Innerhalb des SCR-Systems sollen zumindest einige Verbinder ebenfalls elektrisch beheizbar sein, wozu offensichtlich das Kunststoffmaterial des Verbinders als Heizelement wirkt, indem es elektrisch leitfähige Zusätze enthält. Der Körper des Verbinders weist einen auf einer Seite radial angeformten Halteabschnitt (intermediate portion) auf, der frei nach außen ragende elektrische Kontakte trägt, die über ein inneres, in das Kunststoff-Material eingebettetes Heizelement verbunden sind. Das Heizelement ist somit nur eine kurze Leitungsverbindung zwischen den Kontakten, die zudem nur auf einer Seite des Fluid-Kanals und relativ weit von diesem beabstandet liegt. Der Heizleiter der Leitung wird beim Aufstecken des Leitungsendes auf den Anschlussstutzen über einen Anschlusskontakt mit dem am Verbinder bzw. dem Halteabschnitt fixierten Kontakt elektrisch verbunden.

In dem Dokument EP 0 379 635 A1 ist nur ein wärmeisoliertes Verbindungs- oder Verteilerstück für beheizbare Schläuche beschrieben. Dieses Verbindungsstück besteht aus einem Verbindungselement, welches mit jeweils einem Schlauchstutzen in das Innere eines Schlauches eingesteckt wird. Das Verbindungselement selbst ist nicht beheizbar. Die Schlauchbeheizung erfolgt über Heizleiter, die in oder an der Schlauchwandung angeordnet sind, und die neben dem Verbindungselement miteinander verbunden werden müssen. Zur äußeren Isolierung ist jedenfalls ein in zwei Halbschalen geteiltes Hüllrohr erforderlich, welches nur optional mit einer Isoliermasse verfüllbar ist. Dies ist aber nicht ohne das Hüllrohr möglich. Somit betrifft dieses Dokument eigentlich nur eine auch zur elektrischen Kabelverbindung übliche "Gießmuffe".

Schließlich beschreibt das Dokument GB 2 423 686 A1 bei einer elektrisch beheizbaren Leitung einen Verbinder, der selbst nicht beheizbar ist. Vielmehr ist nur die Leitung beheizbar, wozu sie aus einem inneren Schlauch, einer elektrisch leitenden Zwischenschicht und einer äußeren Schutzhülse besteht. Zur Spannungsversorgung verlaufen zwei blanke Leiter diametral gegenüberliegend durch die leitende Zwischenschicht. Diese Leitung wird einschließlich der äußeren Schutzhülse bis zu einem Anschlag auf einen Anschlussstutzen des Verbinders aufgesteckt, und die Leiter werden mit Leitern eines zweiadrigen Anschlusskabels verbunden. Danach wird der Verbinder im Anschlussbereich umspritzt, wodurch ein Verbindungsblock (moulded junction block) gebildet wird, der die Leitung und den Verbinder in ihrem Übergangsbereich unter Einschluss der elektrischen Verbindungen zwischen den Leitern der Schlauchleitung und den Leitern des Kabels umgibt.

Der vorliegenden Erfindung liegt die Aufgabe zu Grunde, eine beheizbare Medienleitung der genannten Art zu schaffen, die einfach und mit hoher Prozesssicherheit herstellbar ist sowie gute und dauerhaft sichere Gebrauchseigenschaften gewährleistet.

Diese Aufgabe wird durch die Merkmale des unabhängigen Anspruchs 1 gelöst. Vorteilhafte Ausgestaltungen sind in den abhängigen Ansprüchen enthalten.

Erfindungsgemäß ist demnach unter anderem vorgesehen, dass die Fluidleitung und der Fluidverbinder bereichsweise unter Einschluss von elektrischen Verbindungen der Heizmittel mit einer Kunststoff-Formmasse, insbesondere einem thermoplastischen Formteilwerkstoff, z. B. auf PA-Basis, umgeben (z. B. umspritzt oder vergossen) sind. Dadurch sind die erforderlichen elektrischen Verbindungen in einem angeformten Ansatzteil stoffschlüssig eingebettet und somit unbeweglich fixiert und vor mechanischen und sonstigen Einflüssen geschützt sowie gegeneinander elektrisch isoliert. Erfindungsgemäß erfolgt das Anformen des Ansatzteils in einem Übergangsbereich von Leitungsende und Fluidverbinder. Somit wird vorteilhafterweise eine vergossene Baueinheit gebildet, die aus der Fluidleitung und mindestens einem endseitigen Fluidverbinder mit deren Heizmitteln besteht.

Erfindungsgemäß wird dadurch eine einfache und prozesssichere Herstellbarkeit erreicht, indem zunächst ein Leitungsende der Fluidleitung mit dem Fluidverbinder verbunden wird, nachfolgend die elektrischen Verbindungen zwischen den Heizmitteln und gegebenenfalls äußeren Versorgungsleitern hergestellt werden und schließlich bevorzugt ein Übergangsbereich zwischen dem Fluidverbinder und der Fluidleitung unter Einschluss der elektrischen Verbindungen mit Kunststoff umspritzt wird. Zusätzlich kann auch die Fluidleitung in einem praktisch beliebigen, z. B. etwa mittigen Bereich ihrer Verlaufslänge unter Einbindung von elektrischen Anschlussverbindungen der Heizmittel mit Kunststoff umspritzt werden. In diesem Bereich wird dann bevorzugt ein gesondertes, den Bereich des angeformten Kunststoffteils umschließendes Abzweiggehäuse montiert, wobei elektrische Versorgungsleiter über einen Abzweig nach außen geführt werden.

Weitere bevorzugte Ausgestaltungsmerkmale der Erfindung sind in den abhängigen Ansprüchen und der nachfolgenden Beschreibung enthalten.

Anhand von einigen in der Zeichnungen veranschaulichten, bevorzugten Ausführungsbeispielen soll die Erfindung genauer erläutert werden. Dabei zeigen:
- Fig. 1: eine vergrößerte Seitenansicht eines Endbereiches einer erfindungsgemäßen Medienleitung mit zusätzlicher Darstellung einer Gehäusehälfte eines Außengehäuses sowie einer rohrförmigen, die Fluidleitung umschließenden Umhüllung,
- Fig. 2: eine Darstellung wie in Fig. 1 mit zusätzlicher Veranschaulichung von Heizleitern und äußeren Versorgungsleitern,
- Fig. 3: in einem verkleinerten Maßstab eine Darstellung wie in Fig. 1, aber ohne Außengehäuseteil,
- Fig. 4: eine vorteilhafte Ausgestaltung der Erfindung in einer Ansicht analog zu Fig. 1 bzw. 2,
- Fig. 5: eine gesonderte Ansicht auf die Innenseite einer Außengehäusehälfte zur Ausführung gemäß Fig. 4,
- Fig. 6: eine Ansicht der Außengehäusehälfte in Pfeilrichtung VI gemäß Fig. 5,
- Fig. 7: eine Ansicht auf die Außenseite der Außengehäusehälfte in Pfeilrichtung VII gemäß Fig. 6,
- Fig.8: eine Seitenansicht auf eine alternative Ausführungsform eines zweiteiligen Außengehäuses mit einem zusätzlichen Abzweigstück,
- Fig. 9: eine gesonderte Perspektivansicht des Abzweigstückes gemäß Fig. 8 in einem geöffneten Zustand,
- Fig. 10: ein schematisches Ersatzschaltbild der elektrischen Heizmittel des Fluidverbinders und der Fluidleitung,
- Fig. 11-13: verschiedene Verschaltungsvarianten der Heizmittel, wobei in Fig. 11a, 12a und 13a jeweils ein schematisches Schaltbild und in den Fig.11b, 12b, 13b und 13c jeweils der Bereich des erfindungsgemäßen aus Kunststoff angeformten Ansatzteils mit elektrischen Leitern und Verbindungen veranschaulicht ist,
- Fig. 14: eine Perspektivansicht einer konfektionierten Medienleitung , die zum Teil der Ausführung nach Fig. 8 entspricht,
- Fig. 15: die Medienleitung ähnlich Fig. 14 in Seitenansicht und in einer Ausführungsvariante,
- Fig. 16: eine Seitenansicht einer konfektionierten Medienleitung in einer besonderen Ausgestaltung mit teilweise aufgeschnitten dargestellter Leitungs-Umhüllung,
- Fig. 17: eine Ausschnittvergrößerung des Bereiches XVII in Fig. 16;
- Fig. 18: ein elektrisches Ersatzschaltbild zur Ausführung gemäß Fig. 16,
- Fig.19: einen Längsschnitt durch den Endbereich einer erfindungsgemäßen Medienleitung mit Fluidleitung und Fluidverbinder in einer alternativen Ausgestaltung,
- Fig.20: eine Perspektivansicht zur Ausführung nach Fig. 19 in einer Ausführungsvariante und in einem Vormohtagezustand und
- Fig. 21: einen Teilausschnitt des Bereiches XXI aus Fig. 19 in einer weiteren Ausführungsvariante im Verbindungsbereich von Fluidleitung und Fluidverbinder.

In den verschiedenen Figuren der Zeichnung sind gleiche Teile stets mit den gleichen Bezugszeichen versehen.

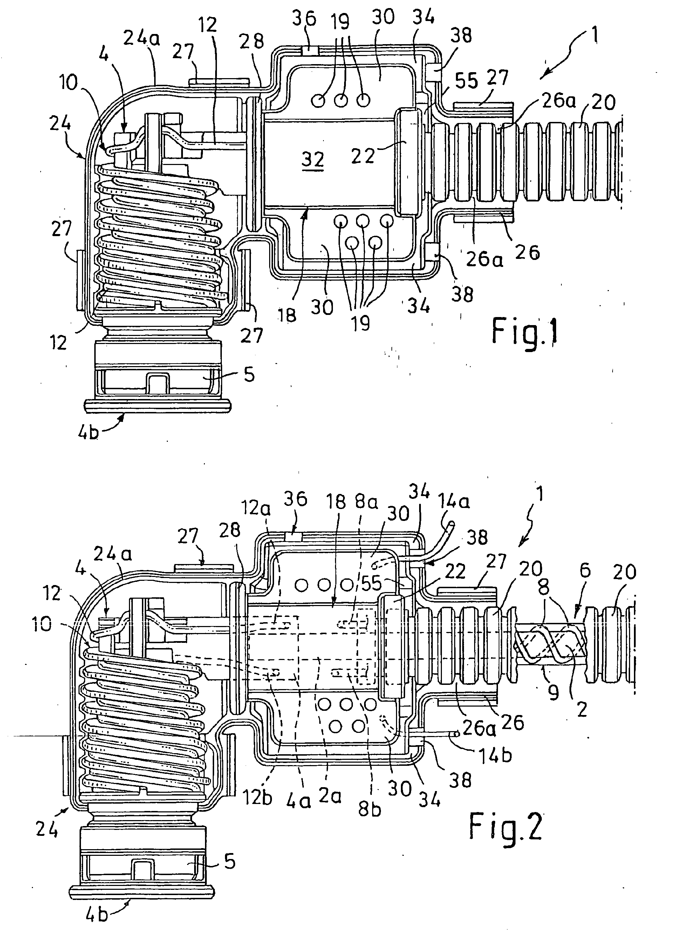

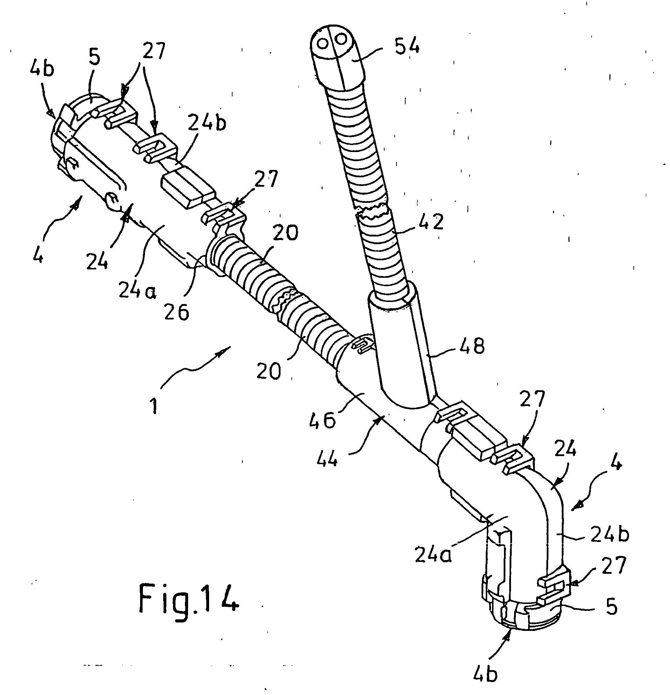

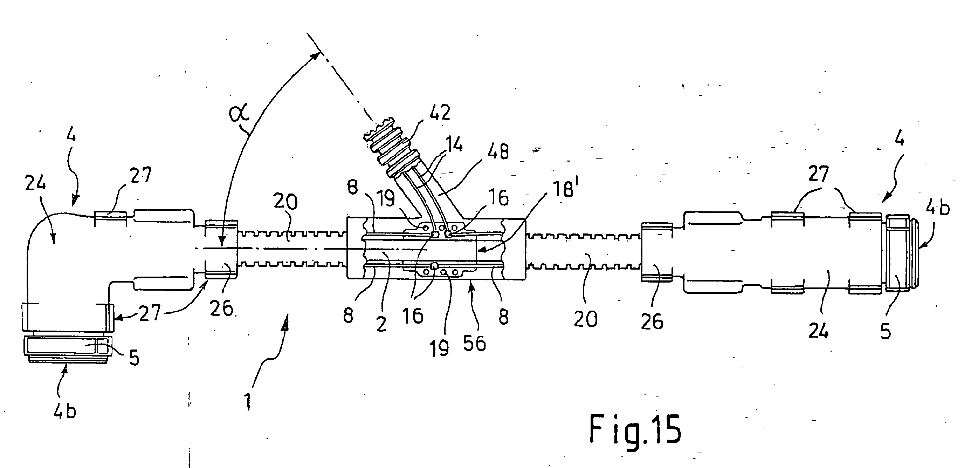

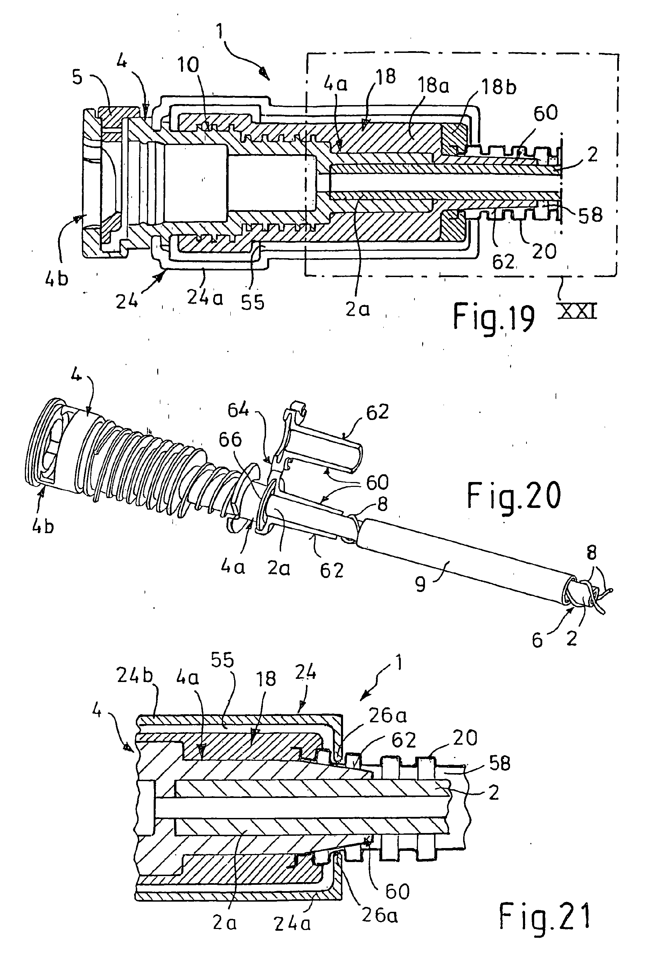

Wie sich aus den Fig. 1 bis 4 ergibt, besteht eine erfindungsgemäße, elektrisch beheizbare Medienleitung 1 aus einer Fluidleitung 2 und mindestens einem Fluidverbinder 4. Der Fluidverbinder 4 ist mit einem Leitungsende 2a der Fluidleitung 2 umfangsgemäß dicht verbunden. Die Fluidleitung 2 kann anderendig analog mit einem weiteren (zweiten) Fluidverbinder 4 verbunden sein (s. Fig. 14 und 15), wobei der jeweilige Fluidverbinder 4 als Winkelverbinder oder geradliniger Verbinder ausgebildet sein kann (vgl. auch Fig. 19 und 20). Alternativ kann das andere Ende der Fluidleitung 2 auch direkt an einem beliebigen Aggregat, beispielsweise einem Tank, angeschlossen sein oder werden. Die Fluidleitung 2 ist vorzugsweise als Rohrleitung aus Kunststoff (z. B. PA) ausgebildet. Der Fluidverbinder 4 bildet bevorzugt ein Kupplungsteil einer Fluid-Steckverbindung. Dazu besteht der Fluidverbinder 4 aus einem Anschlussabschnitt 4a zur Verbindung mit der Fluidleitung 2 bzw. mit deren Leitungsende 2a (s. dazu insbesondere Fig. 2) sowie aus einem Steckanschluss 4b, der in den dargestellten Ausführungsbeispielen als Muffe zur Aufnahme eines nicht dargestellten Fluidsteckers ausgebildet ist. Zur lösbaren Arretierung des eingesteckten Fluidsteckers ist im Bereich der Muffe eine radial elastische Halteklammer 5 angeordnet. Alternativ zu der dargestellten Ausführung kann der Steckanschluss 4b grundsätzlich auch als Stecker ausgebildet sein. Der Anschlussabschnitt 4a ist bevorzugt als Aufnahme zum Einstecken des Leitungsendes 2a ausgebildet, wobei insbesondere eine unlösbare, stoffschlüssige Verbindung durch Verkleben oder Verschweißen, insbesondere durch Laserschweißen, erfolgt. Dazu besteht auch der Fluidverbinder 4 als insbesondere einstückiges Formteil aus Kunststoff, vorzugsweise aus einem faserverstärkten Polyamid, wie PA 6.6 GF 30 oder PA 12 GF 30. Zumindest der Bereich des Anschlussabschnittes 4a sollte für Laserstrahlen "transparent" sein.

Wie schon erwähnt kann der Fluidverbinder 4 geradlinig oder als Winkelverbinder ausgebildet sein, wobei die Achsen der Abschnitte 4a und 4b einen bestimmten Winkel von beispielsweise 90° einschließen.

Die Fluidleitung 2 ist, mit elektrischen Heizmitteln 6 insbesondere in Form von mindestens einem bevorzugt schraubenlinienförmig über den Umfang der Fluidleitung 2 verlaufenden Heizleiter 8 ausgestattet. Der Heizleiter 8 kann aus einem schraubenförmig gewickelt von einem Leitungsende zum anderen Ende verlaufenden Hinleiter und einem z. B. geradlinig oder ebenfalls gewickelt verlaufenden Rückleiter bestehen, wodurch eine gute Verteilung der Heizleistung erreicht wird. Der Heizleiter 8 kann mittels einer die Fluidleitung 2 unter Einschluss der Heizleiter 8 eng umschließenden Fixierlage 9, beispielsweise mittels eines schraubenlinienförmig um die Fluidleitung 2 gewickelten Klebebandes, oder auf andere geeignete Weise auf der Fluidleitung 2 fixiert sein.

Weiterhin ist auch der Fluidverbinder 4 mit elektrischen Heizmitteln 10 ausgestattet, die bevorzugt ebenfalls von mindestens einem über seinen Außenumfang verlaufenden Heizleiter 12 gebildet sind. Auch der Heizleiter 12 kann aus einem gewickelten Hinleiter und einem z. B. auf kurzem Weg geführten Rückleiter bestehen.

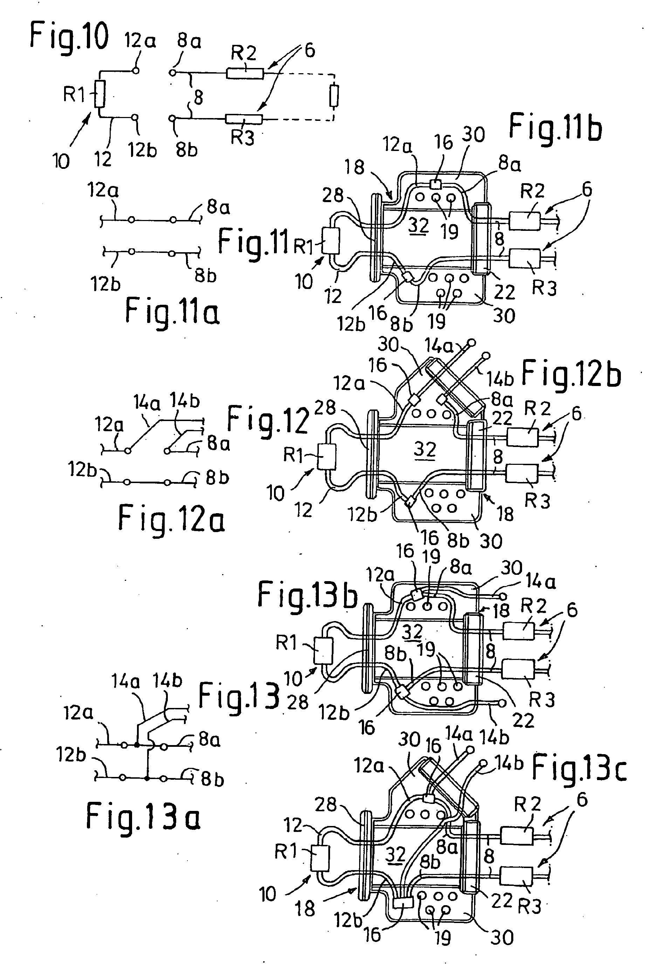

Insbesondere in einem Übergangsbereich zwischen der Fluidleitung 2 und dem Fluidverbinder 4 sind Leiterenden 8a, 8b und 12a, 12b der Heizleiter 8, 12 miteinander und/oder mit äußeren Versorgungsleitern 14a, 14b über elektrische Verbindungen 16 verbunden (verschaltet). Zu diesen - in Fig. 2 nicht eingezeichneten - Verbindungen 16 wird auf die in den Fig. 10 bis 13 veranschaulichten Möglichkeiten verwiesen, die weiter unten noch genauer erläutert werden.

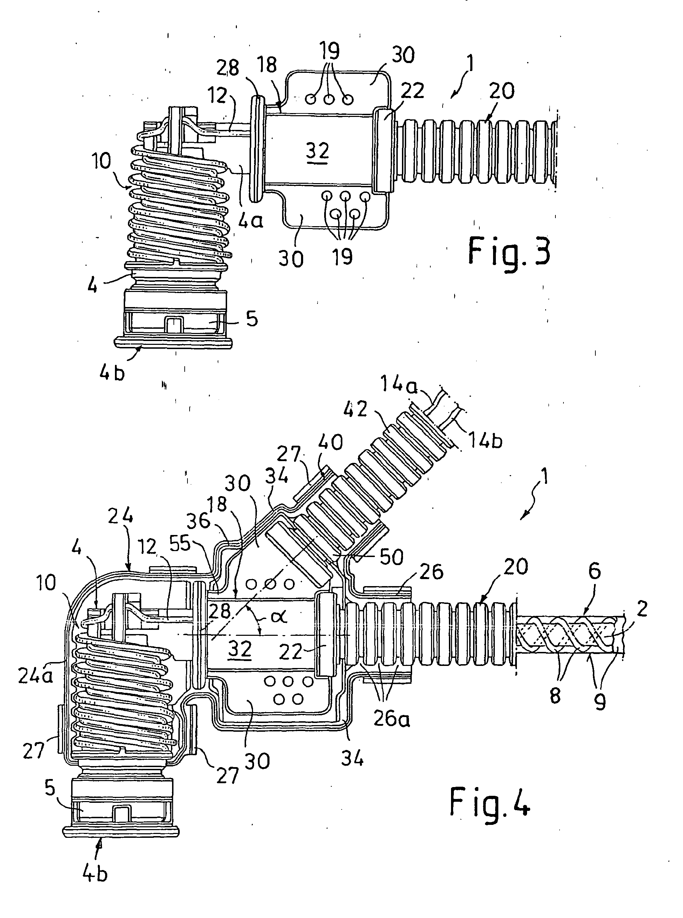

In den Ausführungen gemäß Fig. 1 bis 14 ist nun vorgesehen, dass die Fluidleitung 2 und der Fluidverbinder 4 in einem Übergangsbereich ein Ansatzteil 18, aufweisen, welches erfindungsgemäß durch Anformen (z. B. Umspritzen oder Vergießen) aus Kunststoff unter Einschluss der elektrischen Verbindungen 16 der Heizmittel 6, 10 gebildet ist. Hierdurch entsteht eine vergossene Baueinheit aus der Fluidleitung 2 und dem Fluidverbinder 4 mit deren Heizmitteln 6, 10, wobei die erforderlichen elektrischen Verbindungen 16 in dem angespritzten Ansatzteil 18 eingebettet und dadurch vor jeglichen mechanischen und sonstigen Einflüssen geschützt sowie auch gegeneinander elektrisch isoliert sind. Zu dieser vergossenen Baueinheit wird insbesondere auf Fig. 3 verwiesen. Als Vergussmasse sollte bevorzugt ein transparentes Material verwendet werden, wodurch die Lage der eingebetteten elektrischen Verbindungen 16 von außen leicht kontrolliert werden kann.

Das Umspritzen oder Vergießen zur Bildung des Ansatzteils 18 erfolgt in einem geeigneten Formwerkzeug. Dieses Werkzeug kann beispielsweise stiftförmige Positionierungselemente für die elektrischen Verbindungen 16 aufweisen, um diese während des Formvorgangs so zu positionieren, dass sie optimal in den Kunststoff eingebettet werden. Zudem sollen auch Berührungen der metallischen, abisolierten Enden der Heizleiter vermieden werden. Durch diese Positionieransätze entstehen nach dem Formvorgang gemäß Fig. 1 bis 4 und 11b bis 13c Löcher 19, die aber nachfolgend keine Bedeutung mehr haben.

In vorteilhafter Ausgestaltung der Erfindung ist die Fluidleitung 2 zusammen mit ihren Heizmitteln 6 von einer koaxialen Umhüllung 20 umschlossen. Diese Umhüllung 20 ist insbesondere von einem Wellrohr gebildet, bei dem es sich um ein parallel gewelltes Schutzrohr insbesondere aus Kunststoff (z. B. PA) handelt. In diesem Zusammenhang ist es besonders vorteilhaft, wenn das angeformte Ansatzteil 18 auch einen Endbereich der Umhüllung 20 form- und/oder stoffschlüssig einschließt. Dazu kann das Ansatzteil 18 in diesem Bereich einen geformten Ringkragen 22 aufweisen.

Bei Ausführungen, bei denen über die in dem Ansatzteil 18 eingebetteten elektrischen Verbindungen 16 auch Versorgungsleiter 14 angeschlossen sind, sind letztere aus dem Ansatzteil 18 nach außen geführt (s. Fig. 2 und Fig. 11 bis 13).

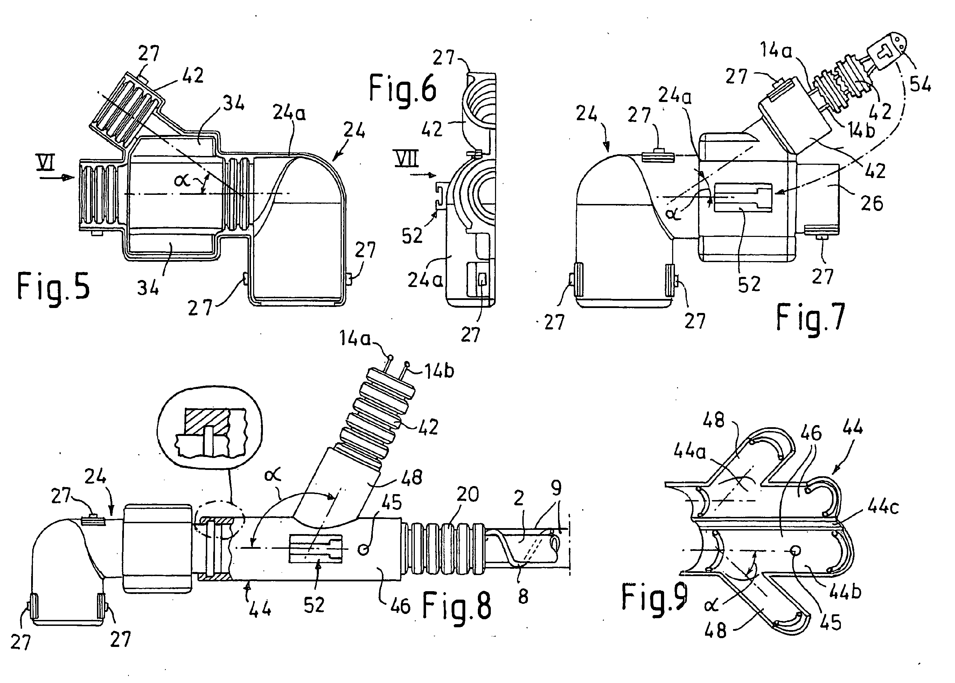

In weiterer erfindungsgemäßer Ausgestaltung ist der Fluidverbinder 4 zumindest im Bereich seiner Heizmittel 10 von einem Außengehäuse 24 umschlossen. Dieses. Außengehäuse 24 besteht vorzugsweise aus zwei halbschalenartigen und miteinander verrastbaren Gehäusehälften 24a, 24b, wobei in den Fig. 1, 2 und 4 jeweils nur eine der Gehäusehälften (24a) dargestellt ist. Ergänzend wird auch auf die Fig. 5 bis 7 und insbesondere auf Fig. 14 verwiesen. In zweckmäßiger Ausgestaltung umschließt das Außengehäuse 24 auch bereichsweise die Fluidleitung 2 und bevorzugt einen Endbereich der Umhüllung 20. Mit Vorteil kann die Umhüllung 20 insbesondere formschlüssig innerhalb des Außengehäuses 24 fixiert sein. Dazu weist das Außengehäuse 24 einen Rohransatz 26 mit inneren Umfangsrippen 26a auf, die radial in umfängliche Rillen der Wellrohr-Umhüllung 20 eingreifen (s. Fig. 1, 2 und 4 sowie auch Fig. 21). Die beiden Gehäusehälften können derart klappbar, z. B. einstückig über mindestens ein Filmscharnier, miteinander verbunden sein, dass sie unter Einschluss des Fluidverbinders 4 durch Zusammenklappen verschließbar und miteinander über Rastmittel 27 verrastbar sind. Es kann sich auch um zwei separate Gehäuse-Halbschalen handeln; in diesem Fall können die Gehäuseteile zumindest annähernd identisch als "Gleichteile" konfiguriert sein.

Weiterhin sind das angeformte Ansatzteil 18 und das Außengehäuse 24 vorzugsweise derart aneinander angepasst, dass eine formschlüssige Fixierung des Ansatzteils 18 innerhalb des Außengehäuses 24 erreicht wird. Dazu kann das Ansatzteil 18 einen Ringkragen 28 aufweisen, der in einer Ringnut innerhalb des Außengehäuses 24 sitzt. Diese Ausgestaltung führt zu einer effektiven Zugentlastung der Heizleiter 8, 12. Weiterhin kann das Ansatzteil 18 flansch- oder flügelartige, diametral in einer Ebene gegenüberliegende Ansätze 30 aufweisen, die von einem zentrischen, etwa zylindrischen Basisabschnitt 32 ausgehen, wobei der Basisabschnitt 32 den Übergangsbereich zwischen dem Anschlussabschnitt 4a des Fluidverbinders 4 und dem Leitungsende 2a der Fluidleitung 2 umschließt. Die Ansätze 30 bewirken eine effektive Verdrehsicherung des Ansatzteils 18 innerhalb des Außengehäuses 24 und können auch zur Unterbringung der elektrischen Verbindungen 16 an beliebigen Stellen benutzt werden (vgl. Fig. 11 bis 13).

Das Außengehäuse 24 weist innenseitig etwa eine Negativkontur des Ansatzteils 18 auf. Die Ansätze 30 werden in Erweiterungen 34 des Außengehäuses 24 aufgenommen.

Bevorzugt kann nach Montage des Außengehäuses 24 ein noch verbleibender freier Innenraum teilweise mit Kunststoff ausgefüllt (vergossen) werden (zweiter Verguss-Schritt mit bevorzugt dem gleichen Material des Ansatzteils 18). Dazu weist das Außengehäuse mindestens eine Öffnung 36 zum Einbringen einer Vergussmasse auf. Bevorzugt ist die Öffnung 36 im Teilungsbereich zwischen den Gehäusehälften angeordnet. Durch dieses Vergießen können auch die Löcher 19 des Ansatzteils 18 ausgefüllt werden. In jedem Fall bleibt aber innerhalb des Außengehäuses 24 noch ein Luftvolumen zur Wärmeisolation erhalten.

Weiterhin kann das Außengehäuse 24 in der Ausführung gemäß Fig. 1 und 2 Durchführöffnungen 38 für die elektrischen Versorgungsleiter 14a, 14b aufweisen. Die so nach außen geführten Versorgungsleiter können anderendig mit nicht dargestellten Verbindern, insbesondere einem elektrischen Steckverbinder zum Anschluss an ein Fahrzeug-Bordnetz, verbunden sein.

In der alternativen Ausgestaltung gemäß Fig. 4 ist vorteilhafterweise vorgesehen, dass das Außengehäuse 24 einen rohrstückförmigen Abzweig 40 für die Versorgungsleiter 14a, 14b aufweist. Dieser Abzweig 40 nimmt vorzugsweise auch ein Ende einer Leiterhülle 42 formschlüssig auf, wobei die Leiterhülle 42 - analog zu der Umhüllung 20 - ebenfalls durch ein Wellrohr gebildet ist. Deshalb weist auch der Abzweig 40 innenseitig entsprechende Stege zum Eingriff in die Rillen der Leiterhülle 42 auf. Der Abzweig 40 kann je nach Winkelausrichtung (α im Bereich von 20° bis 160°) einen Y-Abgang (wie dargestellt) oder aber auch einen T-Abgang bilden. Die Leiterhülle 42 und die Umhüllung 20 können unterschiedliche, insbesondere aber aus Kostengründen gleiche Durchmesser aufweisen.

In einer weiteren Ausführungsvariante gemäß Fig. 8 und 9 kann ein zusätzliches Abzweigstück 44 vorgesehen sein, welches gemäß Fig. 9 vorzugsweise aus zwei Halbschalen 44a und 44b besteht, die bevorzugt über ein Filmscharnier 44c einstückig miteinander verbunden sind. Die Hälften können über das Filmscharnier 44c zusammengeklappt und miteinander verrastet werden. Das Abzweigstück 44 besteht aus einem rohrförmigen, die Fluidleitung 2 umschließenden Durchgangsabschnitt 46 und einem Abzweig 48 für die Versorgungsleiter 14. Der Abzweig 48 ist analog zu dem oben beschriebenen Abzweig 40 ausgebildet. Der Durchgangsabschnitt 46 ist einendig direkt mit dem Außengehäuse 24 verbunden, indem er den Rohransatz 26 formschlüssig aufnimmt. Diese Verbindung kann entweder zur Richtungseinstellung des Abzweiges 48 relativ verdrehbar oder gegen Verdrehen gesichert sein. Anderendig nimmt der Durchgangsabschnitt 46 die Umhüllung 20 der Fluidleitung 2 formschlüssig auf. Auch das Abzweigstück 44 kann über mindestens eine Öffnung 45 (Fig. 8, 9) wenigstens teilweise mit Kunststoff vergossen werden.

Wie sich ergänzend noch aus Fig. 4 ergibt, ist auch die Leiterhülle 42 vorzugsweise mit ihrem Ende form- und/oder stoffschlüssig in das Ansatzteil 18 eingebunden, wozu letzteres einen weiteren Ringkragen 50 aufweisen kann.

Gemäß Fig.7 and 8 kann das Außengehäuse 24 und/oder das Abzweigstück 44 außenseitig (jeweils) ein Halteelement 52 zur fixierenden Halterung eines elektrischen, mit den Versorgungsleitern 14 verbundenen Verbinderteils 54 (Fig. 7 und 14) aufweisen. Das Halteelement 52 kann als Einschub ausgebildet sein; es dient zur vorübergehenden Fixierung des Verbinderteils 54 während Lagerhaltung und Transport, bis bei der Montage der Anschluss der Versorgungsleiter 14 erfolgt. Es braucht dann nur das Verbinderteil 54 aus dem Halteelement 52 entnommen und mit einem Gegenverbinder verbunden zu werden. Die Halterung des Verbinderteils 54 kann natürlich auch auf andere geeignete Weise erfolgen, insbesondere kraft- und/oder formschlüssig oder auch mittels eines Klettverschlusses oder dergleichen.

An dieser Stelle sollen anhand der Fig. 10 bis 13 noch verschiedene Möglichkeiten zur elektrischen Verschaltung der Heizmitteln 6, 10 erläutert werden. In dem Ersatzschaltbild in Fig. 10 ist der Heizleiter 12 als elektrischer Widerstand R1 veranschaulicht. Der oder die Heizleiter 8 der Fluidleitung 2 sind als Widerstände R2 und R3 eingezeichnet (Beispiel für Hin- und Rückleiter).

Gemäß Fig. 11 können die Leiterenden 8a, 8b gesondert mit jeweils einem der Leiterenden 12a, 12b verbunden werden. In diesem Fall wird eine Versorgungsspannung auf der anderen, nicht dargestellten Seite der Fluidleitung 2 bzw. der Heizleiter 8 zugeführt. Die Heizleiter-Widerstände R1, R2, R3 sind in Reihe geschaltet.

Gemäß Fig. 12 können Versorgungsleiter 14a, 14b an eine Reihenschaltung der Heizleiter 8 und 12 angeschlossen werden. Dazu werden die Versorgungsleiter 14a, 14b einerseits mit einem Leiterende 8a und andererseits mit einem Leiterende 12a verbunden, während die anderen Leiterenden 8b und 12b direkt miteinander verbunden werden.

Bei der in Fig. 13 veranschaulichten Verschaltung handelt es sich um eine Parallelschaltung der Heizleiter 8 und 12, indem der eine Versorgungsleiter 14a mit zwei Leiterenden 8a und 12a und der andere Versorgungsleiter 14b mit den beiden Leiterenden 8b, 12b verbunden wird. Gemäß Fig. 13b werden die Versorgungsleiter 14a, 14b direkt aus dem Ansatzteil 18 nach außen geführt, um dann im montierten Zustand des Außengehäuses 24 durch die Durchführöffnungen 38 geführt zu werden. Die Ausführung gemäß Fig. 13c ist für die Ausführungsform gemäß Fig. 4 mit dem Abzweig 40 vorgesehen.

Im Folgenden soll kurz die Herstellung der Medienleitung 1 erläutert werden.

Zunächst wird ein Leitungsende 2a der Fluidleitung 2 mit dem Anschlussabschnitt 4a des Fluidverbinders 4 verbunden. Vorzugsweise handelt es sich um eine unlösbare, stoffschlüssige Verbindung, insbesondere durch Laserschweißen.

Anschließend werden die erforderlichen elektrischen Verbindungen 16 zwischen den Heizmitteln 6, 10 und gegebenenfalls Versorgungsleitern 14 hergestellt. Es wird dann der Übergangsbereich zwischen dem Fluidverbinder 4 und der Fluidleitung 2 so mit Kunststoff umspritzt, dass ein Ansatzteil 18 unter Einschluss der elektrischen Verbindungen 16 gebildet wird.

Bevorzugt kann vor dem Umspritzen die Fluidleitung 2 mit der Umhüllung 20 und optional zuvor noch mit der Fixierlage 9 versehen werden. Im Falle eines einteiligen Wellrohrs wird dieses axial auf die Fluidleitung aufgeschoben. Dies muss jedenfalls vor einer Anschlussverbindung des anderen Endes der Fluidleitung 2 erfolgen. Alternativ kann auch eine zweischalige, längsgeteilte Umhüllung 20 vorgesehen sein, die dann radial montiert werden kann. Die Halbschalen können z. B. durch einen Schrumpfschlauch fixiert werden. Bei dem anschließenden Umspritzen wird bevorzugt auch ein Endbereich der Umhüllung 20 mit in das Ansatzteil 18 eingeformt. Dies gilt im Falle der Ausführung mit Abzweig 40 gemäß Fig. 4 und 13c vorzugsweise auch für die Leiterhülle 42.

In bevorzugter Ausgestaltung wird abschließend der Fluidverbinder 4 mit einem Außengehäuse 24 versehen, wobei ein verbleibender Freiraum 55 innerhalb des Außengehäuses 24 zusätzlich zumindest teilweise mit Kunststoff vergossen werden kann. Alternativ kann aber gemäß Fig. 19 und 21 der Freiraum 55 auch zur Wärmeisolation durch ein darin enthaltenes Luftvolumen genutzt werden.

Bei der in Fig. 15 dargestellten Variante erfolgt eine Verschaltung der Heizleiter 8 der Fluidleitung 2 mit äußeren Versorgungsleitern 14 über Verbindungen 16 in einem beliebigen, von den Fluidverbindern 4 beabstandeten, z. B. etwa mittigen Bereich der Verlaufslänge der Medienleitung 1. Auch dabei sind die elektrischen Verbindungen 16 in ein angeformtes Ansatzteil 18' eingebettet. In diesem Bereich kann ein Abzweiggehäuse 56 angeordnet werden, das weitgehend dem Abzweigstück 44 entspricht und somit die Enden der angrenzenden Leitungs-Umhüllungen 20 und bevorzugt auch der Leiterhülle 42 formschlüssig aufnimmt. In Abweichung von der Darstellung gemäß Fig. 15 können die Enden der Umhüllungen 20 und bevorzugt auch der Leiterhülle 42 zusätzlich auch in das Ansatzteil 18 eingebunden sein. Das Abzweiggehäuse 56 kann ebenfalls zusätzlich zumindest teilweise mit Kunststoff vergossen werden.

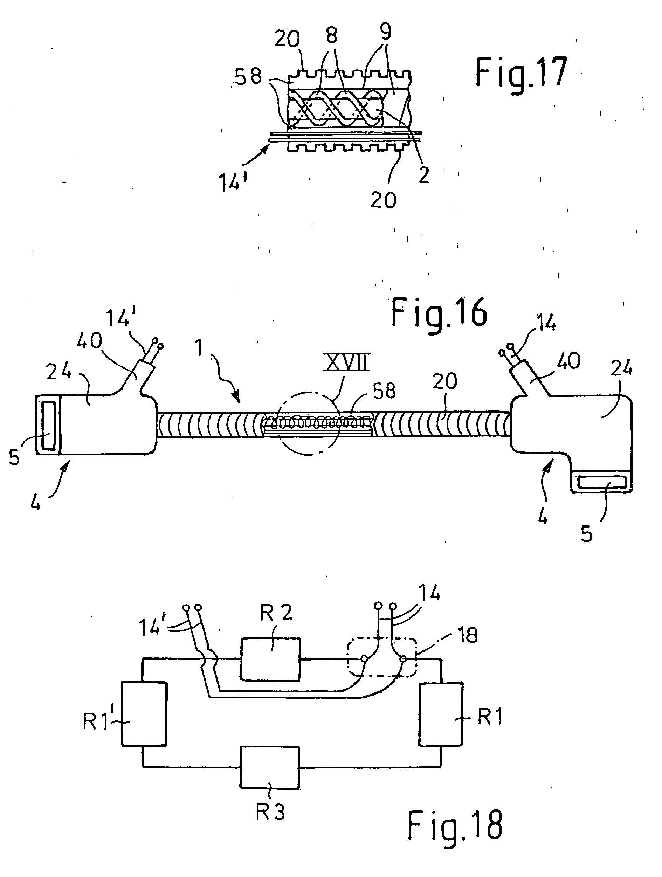

Was die Ausführung der Medienleitung 1 gemäß Fig. 16 bis 18 betrifft, so ist diese praktisch als kombinierte Fluid- und Elektroleitung ausgebildet, indem innerhalb der Umhüllung 20 zusätzliche elektrische Leiter 14 auf direktem Weg zwischen den Fluidverbindern 4 verlaufen. Gemäß Fig. 17 verlaufen die Leiter 14' bevorzugt in einem im Querschnitt ringförmigen Freiraum 58 zwischen der von den Heizleitern 8 und vorzugsweise der Fixierlage 9 umschlossenen Fluidleitung 2 und der Umhüllung 20. Die Leiter 14' dienen zur Weiterführung einer Versorgungsspannung (z. B. einer Fahrzeug-Bordspannung) zwischen den Fluidverbindern 4, so dass vorteilhafterweise die Versorgungsspannung wahlweise an jedem der Verbinder 4, insbesondere über deren Gehäuse-Abzweige 40, zugeführt oder abgegriffen werden kann. Dazu wird auch auf das Schaltbild in Fig. 18 verwiesen.

Abschließend werden noch einige Besonderheiten der Ausführungen gemäß Fig. 19 bis 21 erläutert, wobei zunächst gleiche Teile wie in Fig. 1 bis 18 mit gleichen Bezugszeichen versehen sind und nicht nochmals beschrieben zu werden brauchen.

Der Fluidverbinder 4 weist einen rohrstückförmigen Verbindungsabschnitt 60 mit einer sich in Richtung seines freien Endes leicht konisch verjüngenden Außenumfangsfläche auf, die eine Funktionsfläche 62 für die Umhüllung 20 bildet, indem die Umhüllung 20 der Fluidleitung 2 zur Vorfixierung und auch zur umfangsgemäßen Abdichtung kraftschlüssig (klemmend) auf die Funktionsfläche 62 aufsteckbar ist. Dadurch ist die Umhüllung 20 während des Vergusses fixiert.

Bei der Ausführung gemäß Fig. 19 wird der Verbindungsabschnitt 60 mit der Funktionsfläche 62 durch ein erstes Ansatzteil 18a gebildet, wobei dieses erste Ansatzteil 18a in einem ersten Arbeitsschritt durch Anformen, (z. B. Umspritzen oder Vergießen) gebildet wird. Nach dem Aufstecken der Umhüllung 20 auf den Verbindungsabschnitt 60 wird ein zweites Ansatzteil 18b durch entsprechendes Anformen (Umspritzen oder Vergießen) unter Einschluss des Endes der Umhüllung 20 so gebildet, dass die beiden Teile 18a und 18b sich zu dem Ansatzteil 18 ergänzen.

Gemäß Fig. 20 kann der Verbindungsabschnitt 60 auch Bestandteil eines separaten Bauteils 64 sein, welches mit Vorteil aus zwei Halbschalen besteht, die gelenkig z. B. über ein Filmscharnier verbunden sind, so dass sie unter Einschluss eines Halteabschnittes 66 des Fluidverbinders 4 zusammenklappbar sind. Es kann dann die Umhüllung 20 aufgesteckt und das Ansatzteil 18 angeformt werden. Der Halteabschnitt 66 ist bevorzugt als radialer Ringsteg ausgebildet, der in einer Ringnut des separaten Bauteils 64 aufgenommen wird. Dadurch wird eine formschlüssige Verbindung zwischen dem Bauteil 64 und dem Fluidverbinder 4 erreicht.

Bei der Ausführungsvariante gemäß Fig. 21 ist der Verbindungsabschnitt 60 ein einstückiger Endabschnitt des Anschlussabschnittes 4a des Fluidverbinders 4.

Allgemein ist für alle bisher beschriebenen Ausführungen noch zu sagen, dass zur Bildung des Ansatzteils 18 ein "Hotmelt"-Werkstoff oder ein Kaltverguss eingesetzt werden kann. Das Außengehäuse 24 ist - je nach Ausgestaltung des Ansatzteils 18 - nicht zwingend erforderlich. Wird aber ein Außengehäuse 24 montiert, so kann es vorteilhaft sein, wenn das Ansatzteil 18 Funktionselemente (-flächen) aufweist, die die Montage (Positionierung/Zentrierung) der Gehäuseteile erleichtern (nicht dargestellt).

Die Erfindung ist nicht auf die dargestellten und beschriebenen Ausführungsbeispiele beschränkt, sondern -umfasst auch alle -im Sinne der Erfindung gleichwirkenden Ausführungen. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Elektrisch beheizbare Medienleitung (1), bestehend aus einer Fluidleitung (2) und mindestens einem mit einem Leitungsende (2a) verbundenen Fluidverbinder (4), wobei die Fluidleitung (2) und der Fluidverbinder (4) jeweils elektrische Heizmittel (6, 10) aufweisen, und wobei die Fluidleitung (2) zusammen mit ihren Heizmitteln (6) von einer Umhüllung (20) umschlossen ist, **dadurch gekennzeichnet, dass** dieHeizmittel(10)des Fluidverbinders (4) von mindestens einem über seinen Außenumfang verlaufenden Heizleiter (12) gebildet sind, wobei die sich mit ihrem Leitungsende (2a) über einen Endbereich der Umhüllung (20) hinaus erstreckende Fluidleitung (2) und der Fluidverbinder (4) in einem Übergangsbereich unter bereichsweiser Einbindung des Leitungsendes (2a) und eines Anschlussabschnittes (4a) des Fluidverbinders (4) sowie unter Einschluss von elektrischen Verbindungen (16) der Heizmittel (6,10) mit einer Kunststoff-Formmasse umgeben sind, wobei der Fluidverbinder (4) zumindest im Bereich der Heizmittel (10) von einem Außengehäuse (24) umschlossen ist und ein noch verbleibender freier Innenraum (55) des Außengehäuses (24) ein Luftvolumen zur Wärmeisolation enthält.

2. Medienleitung nach Anspruch 1,
**dadurch gekennzeichnet, dass** die Fluidleitung (2) und der Fluidverbinder (4) in dem Übergangsbereich mit der Kunststoff-Formmasse umspritzt oder vergossen sind.

3. Medienleitung nach Anspruch 1 oder 2,
**dadurch gekennzeichnet, dass** ein durch die Formmasse gebildetes Ansatzteil (18) auch den Endbereich der - insbesondere von einem Wellrohr gebildeten - Umhüllung (20) einschließt.

4. Medienleitung nach einem der Ansprüche 1 bis 3,
**dadurch gekennzeichnet, dass** die Heizmittel (6) der Fluidleitung (2) von mindestens einem schraubenlinienförmig über ihren Umfang verlaufenden Heizleiter (8) gebildet sind, wobei der Heizleiter (8) insbesondere mittels einer Fixierlage (9) auf der Fluidleitung (2) fixiert ist.

5. Medienleitung nach einem der Ansprüche 1 bis 4,
**dadurch gekennzeichnet, dass** mindestens ein elektrischer Versorgungsleiter (14a, 14b) an einer der in der angeformten Kunststoff-Formmasse eingebetteten Verbindungen (16) angeschlossen und aus der Formmasse nach außen geführt ist.

6. Medienleitung nach einem der Ansprüche 1 bis 5,
**dadurch gekennzeichnet, dass** das Außengehäuse (24)
aus zwei halbschalenartigen und miteinander verrastbaren Gehäusehälften (24a, 24b) besteht.

7. Medienleitung nach einem der Ansprüche 1 bis 6,
**dadurch gekennzeichnet, dass** das Außengehäuse (24) auch bereichsweise die Fluidleitung (2) und vorzugsweise die Umhüllung (20) umschließt, wobei die Umhüllung (20) insbesondere formschlüssig innerhalb des Außengehäuses (24) fixiert ist.

8. Medienleitung nach einem der Ansprüche 3 bis 7,
**dadurch gekennzeichnet, dass** das Ansatzteil (18) formschlüssig in dem Außengehäuse (24) fixiert ist.

9. Medienleitung nach einem der Ansprüche 1 bis 8,
**dadurch gekennzeichnet, dass** der freie Innenraum (55) des Außengehäuses (24) teilweise mit Kunststoff ausgefüllt ist, wobei das Außengehäuse (24) mindestens eine Öffnung (36) zum Einbringen einer Vergussmasse aufweist.

10. Medienleitung nach einem der Ansprüche 1 bis 9,
**dadurch gekennzeichnet, dass** das Außengehäuse (24) mindestens eine Durchführöffnung (38) für einen elektrischen Versorgungsleiter (14a, b) aufweist.

11. Medienleitung nach einem der Ansprüche 1 bis 10,
**dadurch gekennzeichnet, dass** das Außengehäuse (24) einen rohrstückförmigen Abzweig (40) für Versorgungsleiter (14a, b) aufweist.

12. Medienleitung nach einem der Ansprüche 1 bis 10,
**gekennzeichnet durch** ein zusätzliches, insbesondere aus zwei Halbschalen (44a, 44b) bestehendes Abzweigstück (44) mit einem rohrförmigen, die Fluidleitung (2) umschließenden Durchgangsabschnitt (46) und einem Abzweig (48) für Versorgungsleiter (14), wobei der Durchgangsabschnitt (46) einendig direkt mit dem Außengehäuse (24) verbunden ist und anderendig die Umhüllung (20) der Fluidleitung (2) formschlüssig aufnimmt.

13. Medienleitung nach einem der Ansprüche 1 bis 12,
**dadurch gekennzeichnet, dass** dieFluidleitung(2)aneiner beliebigen, von dem Fluidverbinder (4) beabstandeten Stelle ihrer Verlaufslänge unter Einbindung von elektrischen Verbindungen (16) der Heizmittel (6) mit Kunststoff umgeben, z. B. umspritzt oder vergossen ist.

14. Medienleitung nach Anspruch 13,
**dadurch gekennzeichnet, dass** der umspritzte Bereich der Fluidleitung (2) zusätzlich von einem Abzweiggehäuse (56) umschlossen ist.

15. Medienleitung nach einem der Ansprüche 11 bis 14,
**dadurch gekennzeichnet, dass** der Abzweig (40; 48) auch ein Ende einer - insbesondere von einem Wellrohr gebildeten - Leiterhülle (42) formschlüssig aufnimmt.

16. Medienleitung nach einem der Ansprüche 1 bis 15,
**dadurch gekennzeichnet, dass** das Außengehäuse (24) und/oder das Abzweigstück (44) oder das Abzweiggehäuse (56) außenseitig ein Halteelement (52) zur fixierenden Halterung eines elektrischen, mit den Versorgungsleitern (14) verbundenen Verbinders (54) aufweisen / aufweist.

17. Medienleitung nach einem der Ansprüche 1 bis 16
**dadurch gekennzeichnet, dass** dieFluidleitung(2)mitihrem Leitungsende (2a) mit dem Fluidverbinder (4) stoffschlüssig verbunden, insbesondere laser-verschweißt ist.

18. Medienleitung nach einem der Ansprüche 1 bis 17,
**dadurch gekennzeichnet, dass** die Umhüllung (20) mit ihrem Endbereich kraftschlüssig aufgesteckt auf einer konischen Funktionsfläche (62) eines Verbindungsabschnittes (60) des Fluidverbinders (4) sitzt.

19. Medienleitung nach einem der Ansprüche 1 bis 18, bestehend aus einer Fluidleitung (2) mit endseitig verbundenen Fluidverbindern (4) und einer die Fluidleitung (2) umschließenden Umhüllung (20),
**dadurch gekennzeichnet, dass** innerhalb der Umhüllung (20), insbesondere in einem Freiraum (58) zwischen der Fluidleitung (2) und der Umhüllung (20), mindestens ein, bevorzugt mindestens zwei elektrische Leiter (14') verlaufen, die Anschlüsse für äußere Versorgungsleiter im Bereich der Fluidverbinder (4) miteinander verbinden.

## Claims

1. Electrically heatable media line (1), comprising a fluid line (2) and at least one fluid connector (4) connected to a line end (2a), the fluid line (2) and the fluid connector (4) each having electrical heating means (6, 10), and the fluid line (2) together with its heating means (6) being enclosed by a sheath (20), **characterised in that** the heating means (10) of the fluid connector (4) are formed by at least one heating lead (12) extending over the outer circumference of the fluid connector (4), the fluid line (2), which extends with its line end (2a) beyond an end region of the sheath (20), and the fluid connector (4) being surrounded by a plastic moulding compound in a transitional area, with regional integration of the line end (2a) and a connecting section (4a) of the fluid connector (4) and with inclusion of electrical connections (16) of the heating means (6, 10), the fluid connector (4) at least in the area of the heating means (10) being enclosed by an external housing (24), and a remaining vacant interior space (55) of the external housing (24) containing an air volume for heat insulation.

2. Media line according to Claim 1,
**characterised in that** the fluid line (2) and the fluid connector (4) are overmoulded or potted with the plastic moulding compound in the transitional area.

3. Media line according to Claim 1 or 2,
**characterised in that** an attachment part (18), which is formed by the moulding compound, also encloses the end region of the sheath (20), the sheath (20) being formed in particular by a corrugated tube.

4. Media line according to one of Claims 1 to 3,
**characterised in that** the heating means (6) of the fluid line (2) are formed by at least one heating lead (8) helically extending over the circumference of the fluid line (2), the heating lead (8) being fixed on the fluid line (2), in particular by means of a fixing layer (9).

5. Media line according to one of Claims 1 to 4,
**characterised in that** at least one electrical supply lead (14a, 14b) is connected to one of the connections (16) embedded in the moulded-on plastic moulding compound and is routed outwards from the moulding compound.

6. Media line according to one of Claims 1 to 5,
**characterised in that** the external housing (24) consists of two half shell-type housing halves (24a, 24b) which can be locked together.

7. Media line according to one of Claims 1 to 6,
**characterised in that** the external housing (24) also regionally encloses the fluid line (2) and preferably the sheath (20), the sheath (20) being fixed, in particular in a form-locked manner, within the external housing (24).

8. Media line according to one of Claims 3 to 7,
**characterised in that** the attachment part (18) is fixed in the external housing (24) in a form-locked manner.

9. Media line according to one of Claims 1 to 8,
**characterised in that** the vacant interior space (55) of the external housing (24) is partially filled with plastic, the external housing (24) having at least one opening (36) for introducing a potting compound.

10. Media line according one of Claims 1 to 9,
**characterised in that** the external housing (24) has at least one through-opening (38) for an electrical supply lead (14a, b).

11. Media line according to one of Claims 1 to 10,
**characterised in that** the external housing (24) has a branch (40), in the form of tube piece, for supply leads (14a, b).

12. Media line according to one of Claims 1 to 10,
**characterised by** an additional branch piece (44), consisting in particular of two half-shells (44a, 44b) with a tubular passage section (46) enclosing the fluid line (2) and with a branch (48) for supply leads (14), the passage section (46) with one end being directly connected to the external housing (24) and with the other end receiving the sheath (20) of the fluid line (2) in a form-locked manner.

13. Media line according to one of Claims 1 to 12,
**characterised in that**, at any desired location over its length and spaced apart from the fluid connector (4), the fluid line (2) is surrounded, e.g. overmoulded or potted, with plastic, with integration of electrical connections (16) of the heating means (6).

14. Media line according to Claim 13,
**characterised in that** the overmoulded area of the fluid line (2) is additionally enclosed by a branch housing (56).

15. Media line according to one of Claims 11 to 14,
**characterised in that** the branch (40; 48) also receives in a form-locked manner one end of a lead sheath (42), the lead sheath (42) being formed in particular by a corrugated tube.

16. Media line according to one of Claims 1 to 15,
**characterised in that** on the outside the external housing (24) and/or the branch piece (44) or the branch housing (56) have/has a holding element (52) for fixedly mounting an electrical connector (54) connected to the supply leads (14).

17. Media line according to one of Claims 1 to 16,
**characterised in that** with its line end (2a), the fluid line (2) is connected to the fluid connector (4) in a materially united manner, in particular by laser welding.

18. Media line according to one of Claims 1 to 17,
**characterised in that** the sheath (20) is seated, with its end region pushed on in a force-locked manner, on a conical functional surface (62) of a connection section (60) of the fluid connector (4).

19. Media line according to one of Claims 1 to 18, comprising a fluid line (2) with fluid connectors (4) connected at the ends and a sheath (20) enclosing the fluid line (2),
**characterised in that** at least one, preferably at least two, electrical leads (14') run inside the sheath (20), in particular in a vacant space (58) between the fluid line (2) and the sheath (20), the electrical leads (14') connecting to one another connections for external supply leads in the area of the fluid connectors (4).

## Revendications

1. Conduit pour fluides pouvant être chauffé à l'électricité (1), composé d'un conduit pour fluides (2) et d'au moins un connecteur pour fluides (4) relié à une extrémité du conduit (2a), dans lequel le conduit pour fluides (2) et le connecteur pour fluides (4) comprennent chacun des moyens de chauffe électriques (6, 10) et dans lequel le conduit pour fluides (2) est entouré d'une gaine (20) conjointement à ses moyens de chauffe (6), **caractérisé en ce que** les moyens de chauffe (10) du connecteur pour fluides (4) sont formés d'au moins un conducteur de chauffe (12) s'étendant au-dessus de sa circonférence externe, dans lequel le conduit pour fluides (2), dépassant avec son extrémité de conduit (2a) d'une zone d'extrémité de la gaine (20), et le connecteur pour fluides (4) sont entourés d'une matière à mouler en plastique dans une zone de transition, avec intégration partielle de l'extrémité de conduit (2a) et d'une partie de raccordement (4a) du connecteur pour fluides (4) ainsi qu'avec inclusion de liaisons électriques (16) des moyens de chauffe (6, 10), dans lequel le connecteur pour fluides (4) est entouré, au moins au niveau des moyens de chauffe (10), d'un boîtier externe (24) et un espace interne encore libre (55) du boîtier externe (24) contient un volume d'air pour l'isolation thermique.

2. Conduit pour fluides selon la revendication 1, **caractérisé en ce que** le conduit pour fluides (2) et le connecteur pour fluides (4) sont recouverts par extrusion ou scellés avec la matière à mouler en plastique dans la zone de transition.

3. Conduit pour fluides selon la revendication 1 ou 2, **caractérisé en ce qu'**une pièce d'embout (18) formée par la matière à mouler englobe également la zone d'extrémité de la gaine (20), notamment formée d'un tuyau ondulé.

4. Conduit pour fluides selon l'une quelconque des revendications 1 à 3, **caractérisé en ce que** les moyens de chauffe (6) du conduit pour fluides (2) sont formés d'au moins un conducteur de chauffe (8) s'étendant au-dessus de sa circonférence de façon hélicoïdale, dans lequel le conducteur de chauffe (8) est fixé sur le conduit pour fluides (2) en particulier au moyen d'un point de fixation (9).

5. Conduit pour fluides selon l'une quelconque des revendications 1 à 4, **caractérisé en ce qu'**au moins un conducteur d'alimentation électrique (14a, 14b) est raccordé à l'une des liaisons (16) encastrées dans la matière à mouler plastique modelée et est conduit vers l'extérieur à partir de la matière à mouler.

6. Conduit pour fluides selon l'une quelconque des revendications 1 à 5, **caractérisé en ce que** le boîtier externe (24) est composé de deux moitiés de boîtier (24a, 24b) à mode de demi-coques et pouvant être encastrées l'une dans l'autre.

7. Conduit pour fluides selon l'une quelconque des revendications 1 à 6, **caractérisé en ce que** le boîtier externe (24) entoure, de manière partielle également, le conduit pour fluides (2) et, de préférence, la gaine (20), dans lequel la gaine (20) est fixée à l'intérieur du boîtier externe (24), en particulier par coopération de formes.

8. Conduit pour fluides selon l'une quelconque des revendications 3 à 7, **caractérisé en ce que** la pièce d'embout (18) est fixée par coopération de formes dans le boîtier externe (24).

9. Conduit pour fluides selon l'une quelconque des revendications 1 à 8, **caractérisé en ce que** l'espace interne libre (55) du boîtier externe (24) est partiellement rempli de matière plastique, dans lequel le boîtier externe (24) comprend au moins un orifice (36) pour l'introduction d'une masse de scellement.

10. Conduit pour fluides selon l'une quelconque des revendications 1 à 9, **caractérisé en ce que** le boîtier externe (24) comprend au moins un orifice d'insertion (38) pour un conducteur d'alimentation électrique (14a, b).

11. Conduit pour fluides selon l'une quelconque des revendications 1 à 10, **caractérisé en ce que** le boîtier externe (24) comporte un embranchement en forme de tronçon de tube (40) pour conducteurs d'alimentation (14a, b).

12. Conduit pour fluides selon l'une quelconque des revendications 1 à 10, **caractérisé par** un raccord en T supplémentaire (44), composé en particulier de deux demi-coques (44a, 44b), comportant une partie de traversée (46) tubulaire, entourant le conduit pour fluides (2) et un embranchement (48) pour conducteurs d'alimentation (14), dans lequel la partie de traversée (46) est directement reliée au boîtier externe (24) à une extrémité et loge la gaine (20) du conduit pour fluides (2) par coopération de formes à l'autre extrémité.

13. Conduit pour fluides selon l'une quelconque des revendications 1 à 12, **caractérisé en ce que** le conduit pour fluides (2) est entouré de plastique, par exemple recouvert par extrusion ou scellé, à n'importe quel emplacement de sa longueur situé à distance du connecteur pour fluides (4), avec intégration de liaisons électriques (16) des moyens de chauffe (6).

14. Conduit pour fluides selon la revendication 13, **caractérisé en ce que** la zone recouverte par extrusion du conduit pour fluides (2) est en outre entourée d'un boîtier de déviation (56).

15. Conduit pour fluides selon l'une quelconque des revendications 11 à 14, **caractérisé en ce que** l'embranchement (40 ; 48) loge également, par coopération de formes, une extrémité d'une enveloppe de conducteur (42), formée en particulier d'un tube ondulé.

16. Conduit pour fluides selon l'une quelconque des revendications 1 à 15, **caractérisé en ce que** le boîtier externe (24) et/ou le raccord en T (44) ou le boîtier de déviation (56) comporte(nt), côté externe, un élément de retenue (52) pour le maintien fixe d'un connecteur électrique (54) relié aux conducteurs d'alimentation (14).

17. Conduit pour fluides selon l'une quelconque des revendications 1 à 16, **caractérisé en ce que** le conduit pour fluides (2) est relié au connecteur pour fluides (4) par la matière, au niveau de son extrémité (2a), notamment par soudage au laser.

18. Conduit pour fluides selon l'une quelconque des revendications 1 à 17, **caractérisé en ce que** la gaine (20) est enfichée par la force, par sa zone d'extrémité, sur une surface fonctionnelle conique (62) d'une partie de liaison (60) du connecteur pour fluides (4).

19. Conduit pour fluides selon l'une quelconque des revendications 1 à 18, composé d'un conduit pour fluides (2) équipé de connecteurs pour fluides (4) reliés à une extrémité et d'une gaine (20) entourant le conduit pour fluides (2), **caractérisé en ce qu'**à l'intérieur de la gaine (20), en particulier dans une zone libre (58) située entre le conduit pour fluides (2) et la gaine (20), s'étendent un ou de préférence au moins deux conducteurs électriques (14') qui relient les raccords pour les conducteurs d'alimentation externes, au niveau des connecteurs pour fluides (4).
